# EUROPEAN PATENT APPLICATION

(11) **EP 1 303 026 A2**
(43) Date of publication of application: **16.04.2003**
(21) Application number: 02078932.7
(22) Date of filing: 23.09.2002
(51) Int. Cl.: H02K 5/15, F16B 31/06, F16B 35/04

(54) **Vehicle AC generator through-bolt**

(30) Priority: 12.10.2001 US 977047
(71) Applicant: Delphi Technologies, Inc., Troy, MI 48007 (US)
(72) Inventor: Shields, Steve J., Muncie, IN 47304 (US); Sarkar, Debabrata, Anderson, IN 46013 (US)
(74) Representative: Denton, Michael John

(57) **Abstract**

A through-bolt (26, 40, 46) for use with an AC generator (10) has a housing (12) including a drive-end portion (14) and a mounting-end portion (16). A stator (18) is mountable between the drive-end portions (14, 16). A rotor (20) is mounted for rotation within the housing (12). One of the end portions (14, 16) includes a plurality of circumferentially spaced ears (22) having first apertures (24) therein and the other end portion (14, 16) includes a corresponding plurality of circumferentially spaced ears (28) having threaded apertures (30) therein. The through-bolt (26, 40, 46) is inserted through one of the first apertures (24) and received in one of the threaded apertures (30) to bolt the housing ends (14, 16) together against the stator (18). The through-bolt (26, 40, 46) is subject to bending stress since it does not operate on a solid stack up, regardless of alignment. The through-bolt (26, 40, 46) comprises a head portion (32), an elongated shank portion (34), and a threaded portion (36) extending from the elongated shank portion (34). The shank portion (34) is necked-down adjacent the threaded portion (36) to a diameter sufficiently less than a minor diameter of the threads in the threaded portion (36) such that the resistance of the through-bolt (26, 40, 46) to fatigue failure is increased.

## Description

### Technical Field

This invention relates to vehicle AC generators and more particularly to an alternator including an improved through-bolt that has increased resistance to fatigue caused by the extreme mechanical stresses imposed on a vehicle AC generator.

### Background of the Invention

Conventional vehicle AC generators are mounted to a bracket mounted on an internal combustion engine or on the engine block with two or more large threaded bolts. These AC generators are belt driven by a drive belt connected with the engine crankshaft. As such, the alternator is exposed to many externally-imposed stresses including vibration, high ambient temperatures, dirt, moisture, etc.

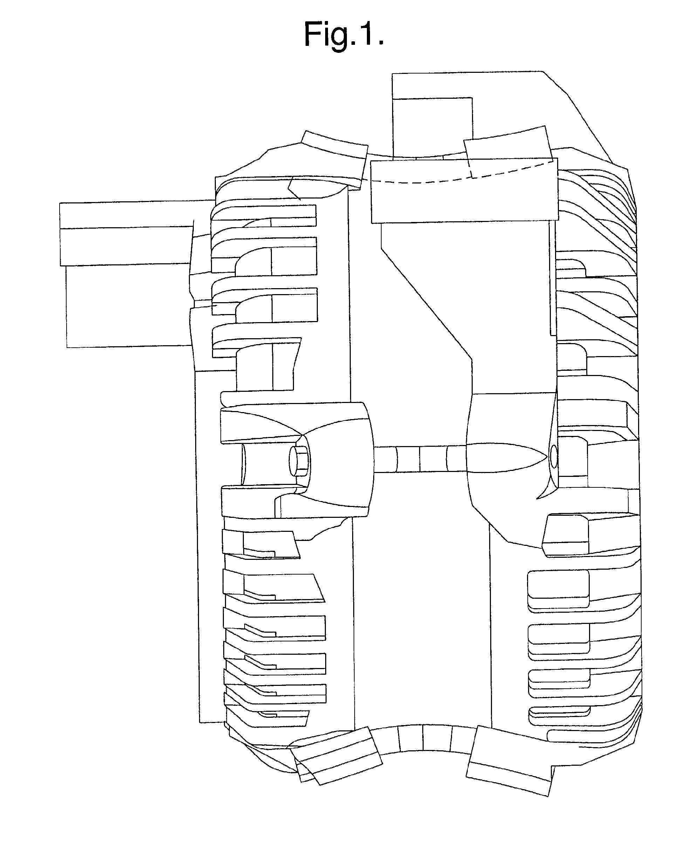

Typically, alternators include a frame or housing having mounting and driving end portions bolted together with three or four threaded fasteners against a stator. One of the end portions will include a plurality of circumferentially spaced ear portions having first apertures therein and the other end portion will have a corresponding plurality of circumferentially spaced ear portions having threaded apertures. Through bolts are inserted through the first apertures and screwed into the threaded apertures mounting a stator between the bolted end portions. The through-bolts endure bending during operational vibration, that induces fatigue in the fasteners. Also the through bolts bend due to the cantilevered nature of the mounting wherein ears in which the through-bolts are mounted extend beyond the stator and the ears are spaced with no stack up between the ears, see FIG. 1.

The mechanical stresses imposed on the through-bolts by the extreme vibration levels, the pull of the drive belt, and the cantilevered mounting of the housing can cause these bolts to fatigue and fail. These effects are exacerbated by the fact that the through-bolt does not operate on a solid stack up. Failure often occurs at the threads, as the threads create a stress concentration factor. The stress concentration factor for rolled threads is large, and is commonly held to be about 3.

An alternator through-bolt offering increased resistance to fatigue failure is highly desirable.

### Summary of the Invention

The present invention provides an alternator through-bolt that is more resistant to fatigue than conventional alternator through-bolts. The fatigue life of the through-bolt is increased by causing the highest stress to occur away from the threads. This is accomplished by reducing the diameter of the shank of the bolt until the highest stress occurs on the shank. Stresses at the threads are correspondingly lower. The advantage in moving the high stress away from the threads offsets any disadvantage of correspondingly higher stress at the shank of the bolt because there is no appreciable stress concentration factor for the shank (and the concentration factor for rolled threads is about 3). The result of this change to fatigue life is non-linear, which allows improvement of the bolt life by making the shank weaker.

The present invention also allows the design to require less loading on the bolt to get the desired amount of stretch to prevent vibrational loosening of the bolt. That is the same amount of load will give more stretch to the bolt, thus providing a design more resistant to vibrational loosening.

Accordingly, a through-bolt in accordance with the present invention is for use with an AC generator having a housing including a drive-end portion and a mounting-end portion. A stator is mountable between the drive-end portions. A rotor is mounted for rotation within the housing. One of the end portions includes a plurality of circumferentially spaced ears having first apertures therein and the other end portion includes a corresponding plurality of circumferentially spaced ears having threaded apertures therein.
The through-bolt is inserted through one of the first apertures and received in one of the threaded apertures to bolt the housing ends together against the stator. The through-bolt is subject to bending stress since it does not operate on a solid stack up, regardless of alignment. The through-bolt comprises a head portion, an elongated shank portion, and a threaded portion extending from the elongated shank portion. The shank portion is necked-down adjacent the threaded portion to a diameter sufficiently less than a minor diameter of the threads in the threaded portion such that the resistance of the through-bolt to fatigue failure is increased.

The necked-down shank may take on a variety of configurations including but not limited to the elongated shank portion including two or more spaced necked-down portions, the elongated shank portion being necked-down generally from the head portion to the threaded portion.

A through-bolt constructed in accordance with the invention may have the necked-down feature rolled into the through-bolt during its manufacture. This is an inexpensive operation, which includes a heading operation to create the head geometry of the bolt, and a subsequent rolling operation to create the threads and the necked down portion or portions.

These and other features and advantages of the invention will be more fully understood from the following description of certain specific embodiments of the invention taken together with the accompanying drawings.

### Brief Description of the Drawings

The present invention will now be described, by way of example, with reference to the accompanying drawings, in which:
FIG. 1 is a side elevational view of an AC generator illustrating as exaggerated the bending of through-bolts used to fasten housing ends together against a stator;
FIG. 2 is a side sectional elevational view of an AC generator illustrating a through-bolt in accordance with the present invention shown fastening the housing ends together against a stator;
FIG. 3 is a side elevational view of a through-bolt constructed in accordance with one embodiment of the invention;
FIG. 4 is a side elevational view of a through-bolt constructed in accordance with another embodiment of the invention; and
FIG. 5 is a side elevational view of a through-bolt constructed in accordance with yet another embodiment of the invention.

### Description of the Preferred Embodiment

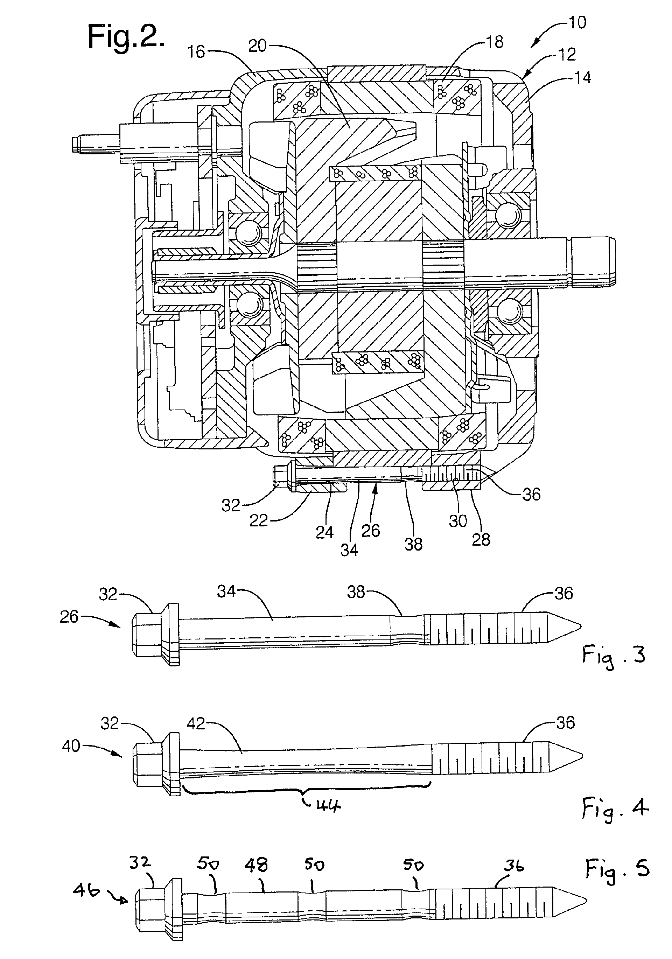

Referring to FIG. 2 of the drawings there is illustrated a vehicle AC generator 10 having a housing 12 including a drive-end portion 14 and a mounting-end portion 16. A stator 18 is mountable between the drive-end 14 and mounting end 16 portions. A rotor 20 is mounted for location within the housing 12. The mounting-end portion 16 includes a plurality of circumferentially spaced ears 22 having apertures 24 therein for receiving a through-bolt 26. The drive end portion 14 includes a corresponding plurality of circumferentially spaced ears 28 having threaded apertures 30 therein whereby a through-bolt 26 is received in one of the threaded apertures to bolt housing ends 14, 16 together against stator 18.

The through-bolt 26 comprises a head portion 32, an elongated shank portion 34, and a threaded portion 36 extending from the elongated shank portion. The shank portion 34 includes a necked-down feature or portion 38 adjacent the threaded portion 36 necked down to a diameter sufficiently less than a minor diameter of thread in the threaded portion 36 to encourage maximum stresses to occur away from the threads. The end portions adjacent ears 22, 28 are deformed during installation by the clamp load of the bolts acting on the overhung or cantilevered outer edges of the end portions. This deformation subjects the through-bolt to bending stress since the bolt does not operate on a solid stack up, regardless of alignment. This bending stress can lead to fatigue failure of the bolt due to vibration of the alternator during vehicle operation. However, the necked-down shank portion increases the resistance of the through-bolt to fatigue failure associated with the mechanical stresses imposed on the through-bolt through the bending stresses, engine and generator vibration, the pull associated with the generator drive belt, and the cantilevered disposition of the generator on the engine.

FIGS. 3-5 illustrate the various embodiments of through-bolt 26 which have been shown to increase the fatigue resistance of the thorough-bolt in use. FIG. 3 illustrates through-bolt 26 having a necked-down feature 38 adjacent the threaded portion 36 of the bolt. FIG. 4 illustrates another embodiment of the through-bolt 40 wherein the elongated shank portion 42 is necked-down at 44 generally from its head portion 32 to its threaded portion 36. FIG. 5 illustrates yet another embodiment of the through-bolt 46 wherein the shank portion 48 includes two or more spaced necked-down portions 50. Each of these embodiments has been found to provide an increased fatigue failure resistance vis-à-vis a conventional electrical generator through-bolt.

The necked-down features 38, 44, 50 are rollable into the shank of the through-bolts during rolling of the threads in manufacture, providing improved bolts with a minimum of increased cost.

While the invention has been described by reference to certain preferred embodiments, it should be understood that numerous changes could be made within the spirit and scope of the inventive concepts described. Accordingly, it is intended that the invention not be limited to the disclosed embodiments, but that it have the full scope permitted by the language of the following claims.

## Claims

1. A through-bolt (26) for use in combination with an electrical AC generator (10) having a housing (12) including a drive-end portion (14) and a mounting-end portion (16), a stator (18) mountable between said drive-end (14) and mounting-end portions (16), and a rotor (20) mounted for rotation within said housing (12), one of said end portions (14, 16) including a plurality of circumferentially spaced ears (22) having first apertures (24) therein and the other of said end portions (14, 16) including a corresponding plurality of circumferentially spaced ears (28) having threaded apertures (30) therein whereby a through-bolt (26) is inserted through one of said first apertures (24) and received in one of said threaded apertures (30) to bolt said housing ends (14, 16) together against said stator (18), whereby the through-bolt (26) is subject to bending stress since it does not operate on a solid stack up, regardless of alignment, said through-bolt comprising:
a head portion (32);
an elongated shank portion (34); and
a threaded portion (36) extending from said elongated shank portion (34);
said shank portion (34) being necked-down adjacent said threaded portion (36) to a diameter sufficiently less than a minor diameter of threads in said threaded portion such that the resistance of said through-bolt (26) to fatigue failure is increased.

2. A through-bolt (46) as in claim 1 wherein said elongated shank portion (42) includes two or more spaced necked-down portions (44).

3. A through-bolt (40) as in claim 1 wherein said elongated shank portion (42) is necked-down generally from said head portion (32) to said threaded portion (36).

4. A through-bolt (26, 40, 46) as in claim 1 wherein said necked-down feature is rolled into said through-bolt.

5. An electrical AC generator (10) having a housing (12) including a drive-end portion (14) and a mounting-end portion (16), a stator (18) mountable between said drive-end (14) and mounting-end (16) portions, and a rotor (20) mounted for rotation within said housing (12), one of said end portions (14, 16) including a plurality of circumferentially spaced ears (22) having first apertures (24) therein and the other of said end portions including a corresponding plurality of circumferentially spaced ears (28) having threaded apertures (30) therein whereby a through-bolt (26) is inserted through one of said first apertures (24) and received in one of said threaded apertures (30) to bolt said housing ends (14, 16) together against said stator (18), whereby the through-bolt (26) is subject to bending stress since it does not operate on a solid stack up, regardless of alignment, said through-bolt (26) comprising:
a head portion (32);
an elongated shank portion (34); and
a threaded portion (36) extending from said elongated shank portion (34);
said shank portion (34) being necked-down adjacent said threaded portion (36) to a diameter sufficiently less than a minor diameter of threads in said threaded portion such that the resistance of said through-bolt (26) to fatigue failure is increased.

6. An AC generator (10) as in claim 5 wherein said elongated shank portion (42) includes two or more spaced necked-down portions (44).

7. An AC generator (10) as in claim 5 wherein said elongated shank portion (42) is necked-down generally from said head portion (32) to said threaded portion (36).

8. An AC generator (10) as in claim 5 wherein said necked-down feature is rolled into said through-bolt (26, 40, 46).
